# EUROPÄISCHE PATENTSCHRIFT

(11) **EP 3 066 735 B1**
(45) Veröffentlichungstag und Bekanntmachung des Hinweises auf die Patenterteilung: **24.12.2025**
(21) Anmeldenummer: 14776867.5
(22) Anmeldetag: 26.09.2014
(51) Int. Cl.: F03D 7/02, H02J 3/38, F03D 9/00, F03D 9/25, H02J 3/48, H02J 3/50

(54) **VERFAHREN ZUM BETREIBEN EINER WINDENERGIEANLAGE**
METHOD FOR OPERATING A WIND TURBINE
PROCÉDÉ PERMETTANT DE FAIRE FONCTIONNER UNE ÉOLIENNE

(30) Priorität: 05.11.2013 DE 102013222452
(43) Veröffentlichungstag der Anmeldung: 14.09.2016
(73) Patentinhaber: Wobben Properties GmbH, 26607 Aurich (DE)
(72) Erfinder: GIERTZ, Helge, 26789 Leer (DE)
(74) Vertreter: Eisenführ Speiser
(86) Internationale Anmeldenummer: PCT/EP2014/070683
(87) Internationale Veröffentlichungsnummer: WO 2015/067408

(56) Entgegenhaltungen:
- EP-A1- 2 187 048
- EP-A2- 1 775 819
- WO-A1-03/058063
- DE-A1- 102006 027 465
- DE-A1- 102011 007 037
- US-A1- 2011 215 775

## Beschreibung

Die vorliegende Erfindung betrifft ein Verfahren zum Betreiben wenigstens einer Windenergieanlage. Außerdem betrifft die vorliegende Erfindung eine Windenergieanlage und sie betrifft auch einen Windpark mit mehreren Windenergieanlagen.

Windenergieanlagen sind allgemein bekannt. Sie erzeugen elektrische Energie aus Wind und speisen diese in ein elektrisches Versorgungsnetz ein. Darüber hinaus ist bereits vor vielen Jahren vorgeschlagen worden, dass Windenergieanlagen so in das elektrische Versorgungsnetz einspeisen, dass sie auch über die reine Bereitstellung von Energie hinaus das elektrische Versorgungsnetz stützen.

Beispielsweise beschreibt die US 6,784,564 ein Verfahren bei dem die eingespeiste Wirkleistung in Abhängigkeit der Netzspannung reduziert wird. Ein Verfahren, das eine von der Netzfrequenz abhängige Leistungsregelung betrifft, ist der US 6,891,281 zu entnehmen. Die Einstellung eines Phasenwinkels in Abhängigkeit der Netzspannung beschreibt die US 6,965,174.

Solche Maßnahmen sind wichtig und können - insbesondere in dezentralen Netzen - die Netzqualität verbessern helfen und mitunter einen stabilen Betrieb des elektrischen Versorgungsnetzes oder zumindest eines Abschnitts davon sogar erst ermöglichen oder dauerhaft sicherstellen. Heutzutage nimmt aber, zumindest in der Bundesrepublik Deutschland, der sicherlich noch viele Länder folgen werden, der Anteil der Windenergieanlagen im Netz zu. Windenergieanlagen wird somit auch in Zukunft eine große, wahrscheinlich steigende Verantwortung für die Stabilisierung elektrischer Versorgungsnetze zukommen. Daher ist deren Fähigkeit der Netzstützung auszubauen und möglichst noch weiter zu verbessern.

Der vorliegenden Erfindung liegt somit die Aufgabe zugrunde wenigstens eines der o.g. Probleme zu adressieren. Insbesondere soll eine Lösung vorgeschlagen werden, die die Stützung eines elektrischen Versorgungsnetzes durch Windenergieanlagen noch weiter verbessern hilft. Zumindest soll eine zu bekannten Verfahren oder Systemen alternative Lösung vorgeschlagen werden.

Das Deutsche Patent- und Markenamt hat in der Prioritätsanmeldung zu vorliegender PCT-Anmeldung folgenden Stand der Technik recherchiert: DE 10 2005 041 927 B4, DE 10 2005 049 426 B4, DE 10 2008 037 449 B4, DE 10 2011 007 037 A1 und WO 2003/ 058 063 A1.

Erfindungsgemäß wird ein Verfahren gemäß Anspruch 1 vorgeschlagen. Dieses steuert wenigstens eine Windenergieanlage, die zum Einspeisen elektrischer Leistung in ein elektrisches Versorgungsnetz vorbereitet ist. Soweit technisch sinnvoll betreffen Erläuterungen im Zusammenhang mit einer einzelnen Windenergieanlage auch mehrere Windenergieanlangen, als auch einen Windpark mit mehreren Windenergieanlagen, auch ohne dass dies jeweils zu jedem einzelnen Merkmal und in jedem einzelnen Vorteil erwähnt wird. Das gilt besonders dann, wenn es sich aus dem Erläuterten ergibt, dass dies ebenso für Windenergieanlagen bzw. einen Windpark Anwendung findet.

Somit wird vorgeschlagen, dass die wenigstens eine Windenergieanlage abhängig von einem Leistungsangebot in dem elektrischen Versorgungsnetz elektrische Wirkleistung dem elektrischen Versorgungsnetz entnimmt. Insbesondere wird im "Normalbetrieb" elektrische Wirkleistung in das elektrische Versorgungsnetz eingespeist, aber im Falle eines Leistungsüberangebotes im Netz elektrische Wirkleistung von der wenigstens einen Windenergieanlage aus dem Netz entnommen. Diese entnommene Wirkleistung wird dann wenigstens einem elektrischen Verbraucher zugeführt, der in der wenigstens einen Windenenergieanlage oder einem Windpark vorhanden ist. Dieser Verbraucher muss nicht unbedingt räumlich in der Windenergieanlage angeordnet sein, auch wenn das häufig der Fall sein wird. Besonders wird hier vorgeschlagen, vorhandene Verbraucher einzusetzen.

Außerdem wird abhängig einer weiteren Zustandsgröße des elektrischen Versorgungsnetzes, wie bspw. der Netzfrequenz oder der Netzspannung des elektrischen Versorgungsnetzes, elektrische Blindleistung in das elektrische Versorgungsnetz eingespeist

Es wird somit ein sogenannter "4-Qudrantenbetrieb" vorgeschlagen, demnach nämlich sowohl die eingespeiste Wirkleistung, als auch die eingespeiste Blindleistung unabhängig voneinander positiv oder negativ sein können. Das vorgeschlagene Verfahren beinhaltet somit ausdrücklich auch die beiden Quadranten, bei denen elektrische Wirkleistung aus dem elektrischen Versorgungsnetz entnommen wird und Blindleistung eingespeist wird, was einen Quadranten darstellt, und bei denen elektrische Wirkleistung aus dem elektrischen Versorgungsnetz entnommen wird und Blindleistung ebenfalls entnommen wird, was einen weiteren Quadranten darstellt.

Vorzugsweise weist wenigstens einer der elektrischen Verbraucher keine elektrischen Widerstandsbänke auf. Es wird also vorzugsweise zumindest ein Verbraucher verwendet, der nicht ausschließlich als Widerstandsbank oder ähnliches zum Vernichten elektrischer Energie, also technisch korrekt ausgesprochen zum Umwandeln elektrischer Energie in thermische Energie ohne weiteren Zweck vorgesehen ist. Vielmehr wird vorgeschlagen, Verbraucher zu verwenden, die ohnehin in einer Windenergieanlage oder einem Windpark vorgesehen sind. Somit kann allein schon durch das vorgeschlagene Verfahren zum Betreiben wenigstens einer Windenergieanlage ein Fortschritt erreicht werden, ohne dass zusätzlich Geräte vorgesehen werden müssen.

Der bzw. die zu verwendenden elektrischen Verbraucher zum Aufnehmen der elektrischen Leistung, die in dem einen Fall aus dem elektrischen Versorgungsnetz entnommen wird, können bspw. eine Blattheizung zum Beheizen eines Rotorblattes umfassen. Ebenfalls kann eine Generatorheizung zum Beheizen eines Generators eingesetzt werden. Als weiteres Beispiel ist eine Gondelheizung genannt, die das Innere einer Gondel einer Windenergieanlage beheizen kann. Weiterhin kommt eine Turmheizung zum Beheizen eines Windenergieanlagenturms in Betracht. Besonders die Verwendung vorhandener Heizungen oder Heizgeräte ermöglicht die Umwandlung einer nicht zu vernachlässigenden elektrischen Energiemenge in thermische Energie, die an die Umgebung abgestrahlt werden kann.

Gleichwohl kommen aber auch andere Verbraucher in Betracht, wie bspw. der Generator der jeweiligen Windenergieanlage, der im motorischen Betrieb betrieben werden kann. Dadurch könnte ein Teil der Energie in Luftbewegung umgesetzt werden. Grundsätzlich kommt auch in Betracht, den Generator dabei so zu betreiben, dass dieser sich erwärmt und insoweit als weiterer Verbraucher zum Umwandeln elektrischer Energie in thermische Energie verwendet wird. Gleichwohl ist hierbei entsprechend vorsichtig vorzugehen, um den Generator nicht zu beschädigen.

Insbesondere wird vorgeschlagen, dass die Verbraucher dann betrieben werden, wenn die Notwendigkeit einer Leistungsabnahme besteht. Die genannten Verbraucher, die hier auch eingesetzt werden sollen, sind jeweils zum Ausüben einer bestimmten Funktion vorgesehen, nämlich der Verbraucherfunktion, die ihnen jeweils zugeordnet ist. Dies ist bei der Blattheizung die Funktion das Blatt zu beheizen. Bei der Generatorheizung ist dies die Funktion den Generator zu beheizen und ggf. auch dadurch zu trocknen. Diese jeweilige Verbraucherfunktion wird üblicherweise nur zu bestimmten Anlässen ausgeführt, also eine Blattheizung wird besonders dann betrieben, wenn ein Eisansatz erkannt wurde und das Eis abgetaut werden soll. Hier wird aber vorgeschlagen, unabhängig von dem Bedarf einer solchen Verbraucherfunktion den entsprechenden Verbraucher zu betreiben, also bspw. auch die Blattheizung im Hochsommer zu betreiben. Entsprechend wird auch gemäß einer Ausführungsform vorgeschlagen, dass die aus dem elektrischen Versorgungsnetz entnommene elektrische Leistung dazu verwendet wird, wenigstens eine Enteisungsvorrichtung, insbesondere einer Blattheizung, unabhängig davon zu betreiben, ob ein Bedarf einer Enteisung besteht. Insbesondere unabhängig davon, ob ein Eisansatz vorhanden ist, zu erwarten ist oder überhaupt möglich ist. Die Enteisungsvorrichtung wird also auch im Hochsommer betrieben. Vorzugsweise werden Windenergieanlagen mit einer Enteisungsvorrichtung auch für Standorte ausgerüstet, an denen per se nicht mit einem Eisansatz jemals zu rechnen ist.

Außerdem oder alternativ wird vorgeschlagen, mit der entnommenen Leistung oder einem Teil davon wenigstens eine Trocknungseinrichtung zum Trocken eines Generators oder zum Trocknen einer anderen Funktionseinheit der Windenergieanlage zu betreiben, unabhängig davon, ob ein Bedarf einer Trocknung besteht. Eine ohnehin vorhandene Generatorheizung oder andere Trocknungseinrichtung kann somit in diesem Fall der Leistungsentnahme aus dem elektrischen Versorgungsnetz als Verbraucher verwendet werden.

Das Leistungsangebot in dem elektrischen Versorgungsnetz kann als eine Zustandsgröße des elektrischen Versorgungsnetzes angesehen werden. Vorzugsweise umfassen die weiteren Zustandsgrößen, in der Abhängigkeit Blindleistung eingespeist wird, die Netzfrequenz des elektrischen Versorgungsnetzes und/oder die Netzspannung des elektrischen Versorgungsnetzes. Gemäß diesen Ausführungsformen wird also das Entnehmen elektrischer Wirkleistung abhängig des Leistungsangebotes eingestellt und das Einspeisen der Blindleistung in Abhängigkeit von Netzfrequenz und/oder Netzspannung vorgenommen. Dabei kann die netzfrequenz- und/oder netzspannungsabhängige Einspeisung oder Entnahme von Blindleistung sowohl qualitativ als auch quantitativ von den genannten Zustandsgrößen abhängen. Es kann also sowohl die Höhe der Blindleistung als auch ein dynamischer Anstieg oder Abfall von den genannten Netzzustandsgrößen abhängen.

Ebenfalls kann als Kriterium die Höhe und/oder das Verhalten der Netzzustandsgrößen berücksichtigt werden.

Vorzugsweise verwendet das Verfahren einen Frequenzwechselrichter, um die Wirkleistung als auch die Blindleistung in das elektrische Versorgungsnetz einzuspeisen bzw. daraus zu entnehmen. Hierdurch ist es möglich, diesen Einspeise- bzw. Entnahmebetrieb vollständig von der Arbeitsweise der Windenergieanlage, insbesondere des Generators, zu entkoppeln. Jegliche Anlagensteuerung kann, bei angepassten Vorgaben, zunächst unverändert weiterbetrieben werden. Natürlich passt die Steuerung dann ggf. den Betrieb der Windenergieanlage an, wenn weniger Leistung gefordert wird oder die Leistung sogar negativ wird. Aber die sofortige Reaktion bei der Einspeisung oder Entnahme von Wirkleistung und/oder Blindleistung kann zunächst unabhängig von dem Frequenzumrichter durchgeführt werden.

Vorzugsweise wird die Windenergieanlage bzw. alle betroffenen Windenergieanlagen im sog. Vollumrichterbetrieb betrieben. Bei diesem Vollumrichterbetrieb wird, um es für den normalen Erzeugungsbetrieb zu erläutern, die gesamte Energie des Generators, die dieser aus dem Wind entnommen hat, gleichgerichtet und in einen entsprechenden Gleichspannungszwischenkreis übertragen. Von diesem Gleichspannungszwischenkreis aus erzeugt der Frequenzwechselrichter bzw. mehrere entsprechend zusammenwirkende Frequenzwechselrichter die einzuspeisende Leistung, also den einzuspeisenden Strom nach Frequenz, Phase und Amplitude.

Im Betrieb der Leistungsentnahme kann dieser Frequenzwechselrichter, der vereinfachend auch nur als Wechselrichter bezeichnet wird, Leistung bzw. Energie aus dem elektrischen Versorgungsnetz in den Gleichspannungszwischenkreis einleiten. Von diesem Gleichspannungszwischenkreis kann dann entsprechende Energie von den entsprechenden Verbrauchern entnommen werden. Vorteilhafterweise erfolgt zwar ein Befehlssignal zur Entnahme solcher Leistung an entsprechende Verbraucher von einer zentralen Stelle in der Windenergieanlage oder sogar im Windpark, aber die sich daran anschließende Umsetzung nimmt der jeweilige Verbraucher selbstständig vor. Schließlich arbeitet der entsprechende Verbraucher auch sonst selbstständig, wenn er nämlich nicht zum Leistungsverbrauch, sondern zum ordentlichen Betrieb seiner Verbraucherfunktion eingesetzt wird.

Vorzugsweise werden bei dem vorgeschlagenen Verfahren mehrere Windenergieanlagen verwendet, die einen Windpark bilden und dabei über einen gemeinsamen Netzanschlusspunkt in das elektrische Versorgungsnetz einspeisen. Hierdurch können die genannten Effekte und die genannten Verhalten gebündelt werden. Ein solcher Windpark, der an einem gemeinsamen Netzanschlusspunkt in das Netz einspeist, hat somit regelmäßig im Vergleich zu einer einzelnen Windenergieanlage auch eine signifikante Größe im Sinne der Menge an einspeisbarer und auch entnehmbarer Leistung, sowohl Blindleistung als auch Wirkleistung. Somit wird ein solcher Windpark in dem beschriebenen 4-Quadrantenbetrieb betrieben und stellt damit aus Sicht des elektrischen Versorgungsnetzes eine signifikante Größe nicht nur für die Bereitstellung von Energie, sondern auch für das Potenzial der Regelfähigkeit dar. Er kann in signifikantem Maße auf das Leistungsangebot, einschließlich der üblichen Leistungsnachfrage eingehen. Er kann dadurch u.a. auch Situationen günstig beeinflussen, bei denen in der Vergangenheit sogar in bestimmten Fällen dafür bezahlt werden musste, Leistung abzunehmen.

Vorzugsweise wird eine Windenergieanlage vorgeschlagen, die dazu vorbereitet ist, ein Verfahren gemäß wenigstens einer der oben beschriebenen Ausführungsformen einzusetzen.

Weiter vorzugsweise wird ein Windpark vorgeschlagen, der mehrere Windenergieanlagen einsetzt und dazu vorbereitet ist, ein Verfahren gemäß wenigstens einer oben beschriebenen Ausführungsform einzusetzen.

Vorzugsweise weist ein solcher Windpark eine zentrale Steuerung zum Steuern der Windenergieanlagen auf, die auch den beschriebenen 4-Quadrantenbetrieb steuert, so dass der Windpark an dem Netzanschlusspunkt als eine effiziente Einspeise- und Regeleinheit wirken kann.

Nachfolgend wird die Erfindung anhand von Ausführungsformen beispielhaft unter Bezugnahme auf die begleitenden Figuren näher erläutert.
- Figur 1: zeigt schematisch eine Windenergieanlage in einer perspektivischen Ansicht.
- Figur 2: zeigt schematisch einen Windpark.
- Figur 3: veranschaulicht den vorgeschlagenen 4-Quadrantenbetrieb anhand eines symbolischen Diagramms.

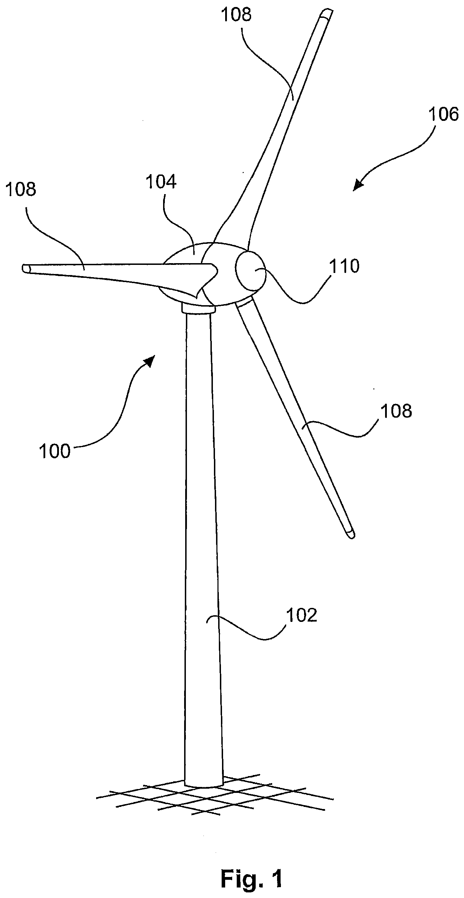

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

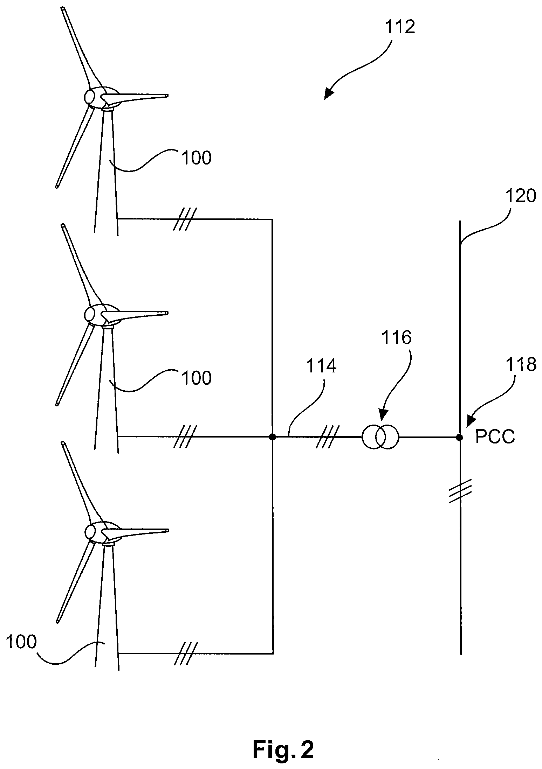

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als gemeinsamer Netzanschlusspunkt oder kurz PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

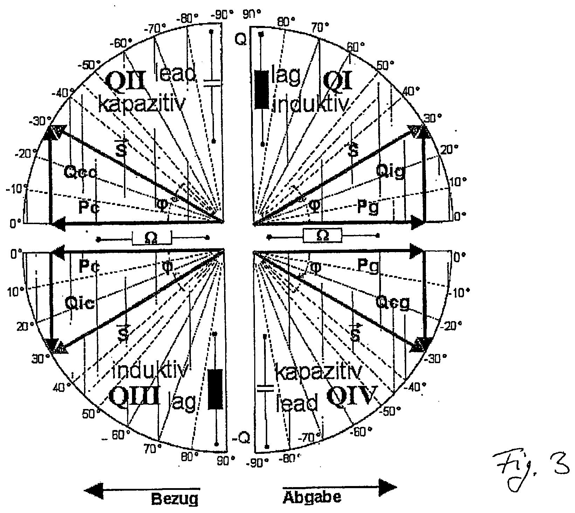

Figur 3 veranschaulicht den vorgeschlagenen 4-Quadrantenbetrieb gemäß einer Darstellungsform in einem Diagramm in der komplexen Ebene, die nämlich in Abszissenrichtung Wirkleistung darstellt und in Ordinatenrichtung Blindleistung Q darstellt. In diesem Diagramm ist somit auch der Winkel *φ* aufgetragen, der insoweit den Phasenwinkel zwischen eingespeistem Strom und Spannung darstellt. Es sind hier graphisch von diesem Diagramm der komplexen Ebene die vier Bereiche, die jeweils einen Quadranten zeigen, zur Veranschaulichung separat gezeigt, indem im Bereich des Koordinatensystems ein Abstand eingetragen ist. Das Diagramm zeigt somit die vier Quadranten, die mit QI bis QIV bezeichnet sind. In diesem Zusammenhang werden damit die vier Quadranten bezeichnet, wobei ansonsten Q die Blindleistung bezeichnet.

Der erste Quadrant QI gemäß Fig. 3 zeigt den Fall, in dem Wirkleistung und Blindleistung eingespeist werden. Die eingespeiste Wirkleistung wird als Pg bezeichnet (generierte Leistung) und die Blindleistung wird als Qig bezeichnet (generierte, induktive Blindleistung). Aus der eingespeisten Wirkleistung Pg und der eingespeisten induktiven Blindleistung Qig ergibt sich die Scheinleistung *̅S̅*̅.

Dieser erste Quadrant kann auch den Normalfall der Einspeisung darstellen. Um nochmal zu verdeutlichen, dass induktive Blindleistung eingespeist wird, was genau zu dem Zeigerdiagramm von Pg, Qig und *̅S̅*̅ führt, ist in dem ersten Quadranten auch das Symbol einer Induktivität eingezeichnet. Durch den vom Fachmann verwendeten Begriff "lag", was so viel wie Nacheilen bedeutet, wird zudem angezeigt, dass in diesem Betrieb der eingespeiste Strom der Spannung nacheilt, nämlich genau um den gezeigten Winkel *φ*.

Im zweiten Quadranten QII wird Wirkleistung aus dem elektrischen Versorgungsnetz entnommen, also verbraucht und nicht generiert, was durch das Symbol Pc (Leistung konsumiert ("consumed")) angezeigt wird. Die Blindleistungskomponente Qcc ist positiv dargestellt. Da aber Wirkleistung entnommen wird, wird hier auch die Blindleistung als entnommen ("consumed") bezeichnet, allerdings als kapazitive Blindleistung, weshalb die Bezeichnung Qcc verwendet wird. Der Strom eilt hier der Spannung vor, was als "lead" bezeichnet wird und durch das Symbol der Kapazität (des Kondensators) in dem zweiten Quadranten QII verdeutlicht wird.

Die entnommene kapazitive Blindleistung Qcc könnte zumindest theoretisch auch als erzeugte induktive Blindleistung Qig bezeichnet werden, was aus technischer Sicht aber verwirrend wäre, zumindest gemäß der gewählten Darstellung, weil der voreilende Strom und entsprechend der gezeigte Winkel *φ* kapazitive Blindleistung bezeichnet.

Im Übrigen sind parallel zur Abszisse zwei Widerstände eingezeichnet, die dadurch die reelle Achse dieser komplexen Darstellung symbolisieren.

Im dritten Quadranten QIII wird ebenfalls Wirkleistung Pc entnommen, also konsumiert. Der Anteil der Blindleistung Qic ist hier aber negativ. Es wird somit induktive Blindleistung verbraucht und der Strom eilt der Spannung nach (lag), weshalb auch hier wieder die Symbolik der eingezeichneten Induktivität verwendet wird.

Der vierte Quadrant QIV zeigt schließlich den Fall, dass Wirkleistung Pg eingespeist und (induktive) Blindleistung Qcg entnommen wird, was dem Einspeisen (Generieren) kapazitiver Blindleistung Qcg entspricht, so dass die Bezeichnung Qcg gewählt wird, weil hier der Strom der Spannung wieder voreilt. Das wird auch hier durch die Kapazität verdeutlicht.

Es wird somit eine Lösung geschaffen, die einen 4-Quadrantenbetrieb einer Windenergieanlage oder eines Windparks vorschlägt und dieses Verhalten ist durch die Figur 3 verdeutlicht.

Hier liegt die Überlegung zugrunde, dass bei der Energiewende in Deutschland die Windenergie eine der Hauptpfeiler ist, wenn nicht sogar der Hauptpfeiler. Technisch inhaltlich sind die Vorschläge natürlich nicht auf Deutschland beschränkt. Durch die hier vorgestellte Lösung werden auch Themen wie Direktvermarktung, Regelreserve und Minutenreserven berücksichtigt, die Bestandteile zum Aufbau so genannter Grüner Kraftwerke bilden. Es wird vorgeschlagen, dass die bereitgestellte Energie so organisiert wird, dass konventionelle Kraftwerke, insbesondere Kernkraftwerke, abgeschaltet werden können. Es muss ohne diese großen und teilweise führenden und netzstabilisierenden Kraftwerke gleichwohl ein stabiles Netz geschaffen und betrieben werden können. Es wurde erkannt, dass ein wesentlicher Punkt hierbei die Lastflusskontrolle im Verteilernetz sowie übergeordnet im Übertragungsnetz ist, die beide Teile des elektrischen Versorgungsnetzes bilden. Diese Lastflusskontrolle ist ein Parameter der Stabilität des elektrischen Versorgungsnetzes.

Ein konventionelles Kraftwerk ist in der Regel konzipiert, Energie zu liefern. Die Systemdienstleistungen eines solchen konventionellen Kraftwerks beschränken sich nur auf die Bereitstellung der benötigten Energie, Lieferung von Blindleistung zur Spannungserhaltung und der Steuerung des Lastflusses im elektrischen Versorgungsnetz. Ein solches Kraftwerk stellt diese Dienstleistung nur im Erzeugungsbetrieb (auch als "Generation-Betrieb" bezeichnet), also bei der Abgabe von Energie zur Verfügung.

Das besondere am vorgeschlagenen 4-Quadrantenkraftwerk, also der Windenergieanlage oder des Windparks, der im 4-Quadrantbetrieb betrieben werden kann, ist die Möglichkeit der Bereitstellung von Systemdienstleistungen auch im konsumierenden Betrieb ("Consumption-Betrieb"), also auch bei Bezug von Energie aus dem elektrischen Versorgungsnetz. Hierzu wird die Möglichkeit der Lastflusssteuerung durch den Verbrauch von Energie vorgeschlagen.

Zusätzlich zur Einspeisereduzierung auf 0 kann auch Leistung aus dem elektrischen Versorgungsnetz entnommen werden.

Um ein Beispiel zu nennen, wird darauf verwiesen, dass im Norden von Deutschland viel Wind herrscht und somit viel Windenergie zur Einspeisung in das elektrische Versorgungsnetz, nämlich damit im Ergebnis auch in das Europäische Verbundnetz bereitsteht. Ein hierdurch entstehendes Überangebot würde den Lastfluss von Nord nach Süddeutschland erheblich erhöhen, was im Verbundnetz zu Problemen führen könnte. Um den Lastfluss im Verbundnetz so zu steuern, dass keine Probleme auftreten können, werden zahlreiche große Verbraucher (z.B. thermische Verbraucher) in den zahlreichen verteilten Windenergieanlagen in Deutschland geregelt zugeschaltet. Bei den Verbrauchern könnte es sich um Generatorheizungen, Blattheizungen sowie im Motorbetrieb betriebene Generatoren handeln. Neben der geregelten Bezugsleistung können auch noch Dienste wie Blindleistung zur Lastflusskontrolle eingebracht werden. Dieses Verfahren kann zwar hinsichtlich einer globalen Energiebilanz Nachteile haben, weist aber ein Vorteil in den zahlreichen weit verbreiteten Aktoren, nämlich Windenergieanlagen auf, die relativ kurzfristig aktiviert und deaktiviert werden können. Es kann also schnell auf Vorgänge im Netz reagiert werden, wobei die vorliegende Erfindung dies zudem für den beschriebenen 4-Quadrantenbetrieb vorschlägt.

Als weiteres Beispiel zur Veranschaulichung wird darauf verwiesen, dass Energie am Spotmarkt gehandelt wird. Es gibt Zeiten, in denen der Strompreis bis minus 3.000 Euro/MWh fallen kann. Dieses regionale Überangebot von Energie und der daraus resultierende negative Preis kann nun geregelt werden, indem die Überschussenergie, die für ein solches beschriebenes Preisverhalten verantwortlich ist, durch Einschalten der großen Verbraucher, insbesondere thermische Verbraucher, in den regionalen Windenergieanlagen reduziert oder sogar vollständig vernichtet wird.

## Patentansprüche

1. Verfahren zum Steuern wenigstens einer Windenergieanlage (100), wobei die wenigstens eine Windenergieanlage (100) zum Einspeisen elektrischer Leistung in ein elektrisches Versorgungsnetz (120) vorbereitet ist, und in einem 4-Quadrantenbetrieb betrieben wird, nämlich abhängig von einem Leistungsangebot in dem elektrischen Versorgungsnetz (120)
- elektrische Wirkleistung aus dem elektrischen Versorgungsnetz (120) entnimmt und wenigstens einem elektrischen Verbraucher der wenigstens einen Windenregieanlage (100) zuführt, und
abhängig einer weiteren Zustandsgröße des elektrischen Versorgungsnetzes (120)
- gleichzeitig elektrische Blindleistung in das elektrische Versorgungsnetz (120) einspeist.

2. Verfahren nach Anspruch 1,
wobei der wenigstens eine, mehrere oder alle der elektrischen Verbraucher keine elektrischen Widerstandsbänke aufweisen und/oder zum Ausüben einer Funktion vorbereitet sind, die nicht allein dem Zwecke dient, elektrische Energie in thermische umzuwandeln.

3. Verfahren nach Anspruch 1 oder 2,
wobei wenigstens einer der elektrischen Verbraucher ausgewählt ist aus der Gruppe umfassend:
- Blattheizung zum Beheizen eines Rotorblattes (108),
- Generatorheizung zum Beheizen eines Generators,
- Gondelheizung zum Beheizen einer Gondel (104),
- Turmheizung zum Beheizen eines Windenergieanalgenturms (102) oder eines Abschnitts davon und
- Generator der jeweiligen Windenergieanlage (100) im motorischen Betrieb.

4. Verfahren nach einem der vorstehenden Ansprüche,
**dadurch gekennzeichnet, dass**
- der wenigstens eine Verbraucher zum Ausüben einer Verbraucherfunktion vorgesehen ist und
- die aus dem elektrischen Versorgungsnetz (120) entnommene elektrische Leistung dazu verwendet wird, den jeweiligen, wenigstens einen elektrischen Verbraucher unabhängig davon zu betreiben, ob in dem Moment ein aktueller Bedarf an der Verbraucherfunktion des Verbrauchers besteht.

5. Verfahren nach einem der vorstehenden Ansprüche,
**dadurch gekennzeichnet, dass**
die aus dem elektrischen Versorgungsnetz (120) entnommene elektrische Leistung dazu verwendet wird
- wenigstens eine Enteisungsvorrichtung, insbesondere eine Blattheizung, unabhängig davon zu betreiben, ob ein Bedarf einer Enteisung besteht, insbesondere unabhängig davon, ob ein Eisansatz vorhanden, zu erwarten oder überhaupt möglich ist, und/oder
- wenigstens eine Trocknungseinrichtung zum Trocknen eines Generators oder zum Trocknen einer anderen Funktionseinheit der Windenergieanlage (100) zu betreiben, unabhängig davon, ob ein Bedarf einer Trocknung besteht.

6. Verfahren nach einem der vorstehenden Ansprüche,
**dadurch gekennzeichnet, dass**
die weitere Zustandsgröße eine Größe umfasst aus der Gruppe
- Netzfrequenz des elektrischen Versorgungsnetzes (120) und
- Netzspannung des elektrischen Versorgungsnetzes (120).

7. Verfahren nach einem der vorstehenden Ansprüche,
**dadurch gekennzeichnet, dass**
das Entnehmen elektrischer Wirkleistung und das Einspeisen elektrischer Blindleistung mittels wenigstens eines Frequenzwechselrichters vorgenommen wird, insbesondere, dass dazu die wenigstens eine Windenergieanlage (100) im Vollumrichterbetrieb betrieben wird.

8. Verfahren nach einem der vorstehenden Ansprüche,
**dadurch gekennzeichnet, dass**
mehrere Windenergieanlagen (100) vorgesehen sind, die einen Windpark (112) bilden und über einen gemeinsamen Netzanschlusspunkt (PCC) in das elektrische Versorgungsnetz (120) einspeisen.

9. Windenergieanlage (100) umfassend einen Frequenzwechselrichter, der dazu eingerichtet ist, elektrische Wirkleistung einzuspeisen oder zu entnehmen und elektrische Blindleistung einzuspeisen oder zu entnehmen, wobei die Windenergieanlage vorbereitet ist zum Verwenden eines Verfahrens nach einem der Ansprüche 1 bis 8.

10. Windpark (112), mit mehreren Windenergieanlagen (100), jeweils umfassend einen Frequenzwechselrichter, der dazu eingerichtet ist, elektrische Wirkleistung in ein elektrisches Versorgungsnetz (120) einzuspeisen oder daraus zu entnehmen und elektrische Blindleistung einzuspeisen oder zu entnehmen, wobei die Windenergieanlage über einen gemeinsamen Netzanschlusspunkt (PCC) in das elektrische Versorgungsnetz (120) einspeisen und ein Verfahren nach einem der Ansprüche 1 bis 9 verwenden.

11. Windpark (112) nach Anspruch 10,
**dadurch gekennzeichnet, dass** eine zentrale Steuerung zum Steuern der wenigstens einen Windenergieanlage (100) vorhanden ist.

## Claims

1. Method for controlling at least one wind turbine (100), wherein
the at least one wind turbine (100) is set up to feed electrical power into an electrical power grid (120), and is operated in a 4-quadrant operation, namely,
depending on a supply of power in the electrical power grid (120),
- removal electrical active power from the electrical power grid (120) and supplies it to at least one electrical consumer of the at least one wind turbine (100), and,
depending on a further state variable of the electrical power grid (120),
- simultaneously feeding electrical reactive power is fed into the electrical power grid (120).

2. Method according to Claim 1,
wherein the at least one, more or all of the electrical consumer(s) has/have no electrical resistor banks and/or is/are set up to perform a function which does not serve the sole purpose of converting electrical energy into thermal energy.

3. Method according to claim 1 or 2,
wherein at least one of the electrical consumers is selected from the group comprising:
- a blade heater for heating a rotor blade (108),
- a generator heater for heating a generator,
- a nacelle heater for heating a nacelle (104),
- a tower heater for heating a wind turbine tower (102) or a portion thereof, and
- a generator of the respective wind turbine (100) in motor operation.

4. Method according to one of the preceding claims,
**characterized in that**
- the at least one consumer is intended to perform a consumer function and
- the electrical power removed from the electrical power grid (120) is used to operate the respective at least one electrical consumer independently of whether at the time there is a current demand for the consumer function of the consumer.

5. Method according to one of the preceding claims,
**characterized in that**
the electrical power removed from the electrical power grid (120) is used
- to operate at least one de-icing device, in particular a blade heater, independently of whether there is a need for de-icing, in particular independently of whether icing is present, is expected or is even possible, and/or
- to operate at least one drying arrangement for drying a generator or for drying another functional unit of the wind turbine (100), independently of whether there is a need for drying.

6. Method according to one of the preceding claims,
**characterized in that**
the further state variable comprises a variable from the group
- grid frequency of the electrical power grid (120) and
- grid voltage of the electrical power grid (120).

7. Method according to one of the preceding claims,
**characterized in that**
the removal of electrical active power and the feeding of electrical reactive power is performed by means of at least one frequency inverter, in particular **in that** the at least one wind turbine (100) is operated in full inverter operation for this purpose.

8. Method according to one of the preceding claims,
**characterized in that**
a number of wind turbines (100) are provided, which form a wind farm (112) and feed into the electrical power grid (120) via a grid point of common coupling (PCC).

9. Wind turbine (100), comprising a frequency inverter which is configured to feed in or remove active power and to feed in or remove reactive power, wherein the wind turbine is set up to use a method according to one of claims 1 to 8.

10. Wind farm (112), comprising a number of wind turbines (100), each comprising a frequency inverter that is configured to feed in active power into an electrical power supply grid (120) or to remove it therefrom and to feed in reactive power or to remove it, wherein the wind turbine which feed into the electrical power grid (120) via a grid point of common coupling (PCC), and a method according to one of claims 1 to 9.

11. Wind farm (112) according to claim 10,
**characterized in that** a central controller for controlling the at least one wind turbine (100) is provided.

## Revendications

1. Gicleur mural vertical pendant (10, 310) pour fenêtres comprenant :
un châssis (12) comportant un corps (14) ayant une entrée (16), une sortie (18) avec un passage interne (20) s'étendant entre l'entrée (16) et la sortie (18) le long d'un axe de gicleur (X-X) ; et
un organe de déviation de fluide (100) situé à une distance fixe de la sortie (18) pour faire face à une fenêtre, l'organe de déviation de fluide (100) est symétrique autour d'un plan bissecteur (P1) qui comporte l'axe de gicleur (X-X), l'organe de déviation de fluide (100) comportant :
une surface d'impact (112) opposée à la sortie (18) et disposée perpendiculairement à l'axe de gicleur (X-X) pour être touchée par le fluide évacué par la sortie de gicleur (18) ; et
une surface de retenue (120) contiguë et hors plan par rapport à la surface d'impact (112) pour diriger le fluide latéralement par rapport au plan bissecteur (P1) et vers l'avant de l'axe de gicleur (X-X),
**caractérisé en ce que** la surface de retenue (120) est arquée et définit au moins un rayon de courbure (RC1, RC2) autour d'un premier axe linéaire (L1-L1) parallèle à l'axe de gicleur (X-X).

2. Gicleur (10, 310) selon la revendication 1, dans lequel la surface de retenue (120) est espacée radialement de l'axe de gicleur (X - X) pour définir une distance radiale minimale (R-Min) dans le plan bissecteur (P1), dans lequel en outre la surface de retenue (120) est arquée définit un premier rayon de courbure (RC1) autour du premier axe linéaire (L1 - L1) et un deuxième rayon de courbure (RC2) autour d'un deuxième axe, le premier axe linéaire (L1 - L1) étant disposé dans le plan bissecteur (P1) et le deuxième axe (L2 - L2) coupant l'axe de gicleur (X - X) et étant perpendiculaire à celui-ci, le premier rayon de courbure (RC1) étant supérieur à la distance radiale minimale (R-Min) et le deuxième rayon de courbure (RC2) étant égal à la distance radiale minimale (R-Min).

3. Gicleur (10, 310) selon la revendication 2, dans lequel le premier rayon de courbure de la surface de retenue (120) est constant sur la longueur d'arc de la surface de retenue (120) autour du premier axe linéaire (L1 - L1).

4. Gicleur (10, 310) selon la revendication 2, dans lequel le deuxième rayon de courbure de la surface de retenue (120) est constant sur la longueur d'arc de la surface de retenue (120) autour du deuxième axe linéaire (L2 - L2) entre la surface d'impact et la surface opposée.

5. Gicleur (10, 310) selon l'une quelconque des revendications 2 à 4, dans lequel, lorsque du fluide est fourni à l'entrée (16) à un débit de 56,8 I/min (15 GPM), l'organe de déviation de fluide (100) projette le fluide latéralement par rapport au plan bissecteur (P1) à une distance maximale allant de plus de 2,4 m à 4,6 m (8+-15 pieds).

6. Gicleur (10, 310) selon la revendication 5, dans lequel la distance maximale va de plus de 2,4 m à 3,7 m (8+-12 pieds).

7. Gicleur (10, 310) selon l'une quelconque des revendications 1 à 6, dans lequel la sortie (18) du corps de châssis (14) définit un diamètre et un rapport de l'au moins un rayon de courbure de la surface de retenue (120) au diamètre de sortie est de 5:1.

8. Gicleur (10, 310) selon l'une quelconque des revendications 1 à 6, dans lequel la sortie (18) du corps de châssis (14) définit un diamètre et un rapport de l'au moins un rayon de courbure de la surface de retenue au diamètre de sortie étant de 3,5:1.

9. Gicleur (10, 310) selon l'une quelconque des revendications 1 à 6, dans lequel l'organe de déviation de fluide (100) définit une largeur maximale et un rapport de l'au moins un rayon de courbure de la surface de retenue (120) à la largeur maximale de l'organe de déviation de fluide (100) étant de 1,6:1.

10. Gicleur (10, 310) selon l'une quelconque des revendications 1 à 9, dans lequel le corps de châssis (14) définit un orifice de sortie ayant un facteur K nominal de 80,6 (l/min)/(bar)^{1/2} (5,6 GPM/(PSI)^{1/2}).

11. Gicleur (10, 310) selon l'une quelconque des revendications 1 à 9, dans lequel l'organe de déviation de fluide (100) est un bloc de distribution de fluide ayant une surface d'opposition opposée à la surface d'impact (112), la surface d'opposition étant contiguë à la surface de retenue (120) pour définir un canal de projection latéral (150) entre la surface d'opposition et la surface d'impact (112).
